# EUROPEAN PATENT SPECIFICATION

(11) **EP 4 113 277 B1**
(45) Date of publication and mention of the grant of the patent: **14.10.2026**
(21) Application number: 22181328.0
(22) Date of filing: 27.06.2022
(51) Int. Cl.: G06F 7/483, G06F 7/487, G06F 7/544

(54) **OPERATING METHOD OF FLOATING POINT OPERATION CIRCUIT AND INTEGRATED CIRCUIT INCLUDING FLOATING POINT OPERATION CIRCUIT**
BETRIEBSVERFAHREN FÜR EINE GLEITKOMMAOPERATIONSSCHALTUNG UND INTEGRIERTE SCHALTUNG MIT EINER GLEITKOMMAOPERATIONSSCHALTUNG
PROCÉDÉ DE FONCTIONNEMENT D'UN CIRCUIT D'OPÉRATION À VIRGULE FLOTTANTE ET CIRCUIT INTÉGRÉ COMPRENANT UN CIRCUIT D'OPÉRATION À VIRGULE FLOTTANTE

(30) Priority: 01.07.2021 KR 20210086614; 17.03.2022 US 202217697516
(43) Date of publication of application: 04.01.2023
(73) Proprietor: Samsung Electronics Co., Ltd., Suwon-si, Gyeonggi-do 16677 (KR)
(72) Inventor: KIM, Joong Baik, 16677 Suwon-si (KR); JUNG, Yongmin, 16677 Suwon-si (KR)
(74) Representative: Marks & Clerk LLP

(56) References cited:
- WEI LIU ET AL: "Temperature aware power optimization for multicore floating-point units", 2010 44TH ASILOMAR CONFERENCE ON SIGNALS, SYSTEMS AND COMPUTERS - 7-10 NOV. 2010 - PACIFIC GROVE, CA, USA, IEEE, PISCATAWAY, NJ, USA, 7 November 2010 (2010-11-07), pages 1134 - 1138, XP031860639, ISBN: 978-1-4244-9722-5, DOI: 10.1109/ACSSC.2010.5757581
- VIITANEN TIMO ET AL: "Inexpensive correctly rounded floating-point division and square root with input scaling", SIPS 2013 PROCEEDINGS, IEEE, 16 October 2013 (2013-10-16), pages 159 - 164, XP032528061, ISSN: 2162-3562, [retrieved on 20131122], DOI: 10.1109/SIPS.2013.6674498
- ANONYMOUS: "Division algorithm - Wikipedia", 5 March 2021 (2021-03-05), XP093068269, Retrieved from the Internet <URL:https%3A%2F%2Fen.wikipedia.org%2Fw%2Findex.php%3Ftitle%3DDivision_algorithm%26oldid%3D1010406185%23Newton%E2%80%93Raphson_division> [retrieved on 20230727]

## Description

### TECHNICAL FIELD

Embodiments of the present disclosure relate to an electronic device, and more particularly, to an operating method of a floating point operation circuit performing a fused multiplication and addition operation and a division operation, and an integrated circuit including the floating point operation circuit.

### DISCUSSION OF RELATED ART

A floating point operation circuit may perform an operation on floating point values. Among various operations, the floating point operation circuit may support a fused multiplication and addition operation with high versatility. In various applications, any other operations other than the fused multiplication and addition operation may be used. For example, some applications may utilize a division operation. To implement the division operation, a floating point operation circuit dedicated for division, that is, a hardware accelerator, may be implemented.

The hardware accelerator provides a fast speed, but utilizes a large area and has high costs. Accordingly, in applications in which the area and costs are limited, the implementation of the hardware accelerator may be limited. Also, the hardware accelerator has low flexibility.

The papers "Temperature aware power optimization for multicore floating-point units" (DOI: 10.1109/ ACSSC.2010.5757581) and "Inexpensive correctly rounded floating-point division and square root with input scaling" (DOI: 10.1109/SIPS.2013.6674498) as well as the Wikipedia article "Division algorithm" of 5 March 2021 are further prior art.

### SUMMARY

Embodiments of the present disclosure provide an operating method of a floating point operation circuit supporting a division operation at a fast speed by using the floating point operation circuit implemented to perform a fused multiplication and addition operation, and an integrated circuit including the floating point operation circuit.

According to an embodiment, an operating method of a floating point operation circuit includes, in response to a first instruction being received, generating a first output by performing a fused multiplication and addition operation on a first input, a second input, and a third input, and in response to receiving a second instruction, generating a second output by inverting one input of a fourth input, a fifth input, and a sixth input. Generating the second output includes generating a transform factor and a simplified value from the one input.

According to an embodiment, an operating method of a floating point operation circuit includes calculating an inverse value of a divisor of a division operation, based on a second operation mode, and performing a multiplication operation of a dividend and an inverse value of the divisor, based on a first operation mode. Calculating the inverse value of the divisor of the division operation, based on the second operation mode, includes generating a transform factor and a simplified value from the divisor, in the second operation mode. The first operation mode may support a fused multiplication and addition operation.

According to an embodiment, an integrated circuit includes a first register, a second register, a third register, a fourth register, a fifth register, and a floating point operation circuit. In a first operation mode, the floating point operation circuit generates a first intermediate value by multiplying a value of the first register and a value of the second register together, generates an output value by adding a value of the third register and the first intermediate value, and stores the output value in the fourth register. In a first phase of a second operation mode, the floating point operation circuit generates a simplified value and a transform factor from a value of the second register, stores the simplified value in the fourth register, and stores the transform factor in the fifth register. A value having a sign opposite to a sign of a value stored in the fourth register is transferred to the first register.

The present invention is defined by independent claim 1. Preferred embodiments are set forth in the dependent claims.

### BRIEF DESCRIPTION OF THE DRAWINGS

The above and other features of the present disclosure will become more apparent by describing in detail embodiments thereof with reference to the accompanying drawings, in which:
FIG. 1 illustrates an application processor according to an embodiment of the present disclosure.
FIG. 2 illustrates a digital signal processing core according to an embodiment of the present disclosure.
FIG. 3 illustrates an example of an operating method of a floating point operation circuit according to an embodiment of the present disclosure.
FIG. 4 illustrates an example of a format of a floating point value processed by a floating point operation circuit.
FIG. 5 illustrates a floating point operation circuit performing fused multiplication and addition and supporting division, according to an embodiment of the present disclosure.
FIG. 6 illustrates an example in which a floating point operation circuit of FIG. 5 performs a fused multiplication and addition operation.
FIG. 7 illustrates an example of a process in which calculation is performed by a floating point operation circuit depending on the method of FIG. 6.
FIG. 8 illustrates an example in which a floating point operation circuit of FIG. 5 performs an inverse operation.
FIG. 9 illustrates an example of a method in which a floating point operation circuit of FIG. 5 performs a transform operation.
FIG. 10 illustrates an example of a process in which transform is performed by a floating point operation circuit depending on the method of FIG. 9.
FIG. 11 illustrates an example of a method in which a floating point operation circuit of FIG. 5 performs an inverse transform operation.
FIG. 12 illustrates an example of a process in which inverse transform is performed by a floating point operation circuit depending on the method of FIG. 11.
FIG. 13 illustrates an example of performing division by using a fused multiplication and addition operation of a floating point operation circuit.
FIG. 14 is a diagram illustrating a system according to an embodiment of the present disclosure.

### DETAILED DESCRIPTION

Embodiments of the present disclosure will be described more fully hereinafter with reference to the accompanying drawings. Like reference numerals may refer to like elements throughout the accompanying drawings.

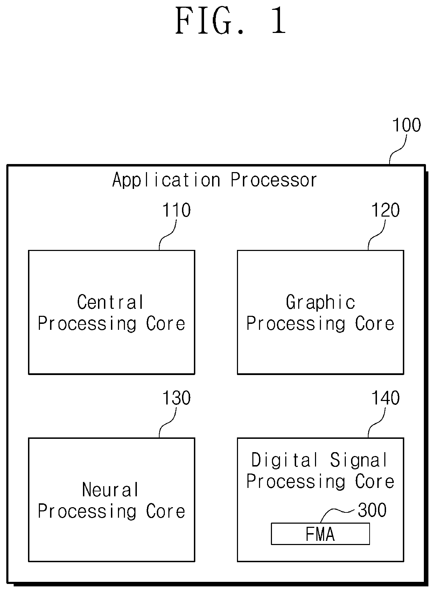

FIG. 1 illustrates an application processor 100 according to an embodiment of the present disclosure. Referring to FIG. 1, the application processor 100 may include a central processing core 110, a graphic processing core 120, a neural processing core 130, and a digital signal processing core 140.

The central processing core 110 may execute an operating system and various applications. The central processing core 110 may assign some of various tasks to the graphic processing core 120, the neural processing core 130, or the digital signal processing core 140. The application processor 100 may include two or more central processing cores. The central processing core 110 may include two or more sub-cores.

The graphic processing core 120 may perform tasks assigned from the central processing core 110, for example, graphic-related tasks. The graphic processing core 120 may send a processing result of the tasks to the central processing core 110 or to external devices. The application processor 100 may include two or more graphic processing cores. The graphic processing core 120 may include two or more sub-cores.

The neural processing core 130 may perform tasks assigned from the central processing core 110, for example, tasks associated with neural network-based inference, neural network-based classification, etc. The neural processing core 130 may send a processing result of the tasks to the central processing core 110 or to external devices. The application processor 100 may include two or more neural processing cores. The neural processing core 130 may include two or more sub-cores.

The digital signal processing core 140 may perform tasks assigned from the central processing core 110, for example, tasks associated with operations for various values. The digital signal processing core 140 may send a processing result of the tasks to the central processing core 110 or to external devices. The application processor 100 may include two or more digital signal processing cores. The digital signal processing core 140 may include two or more sub-cores.

The digital signal processing core 140 may include a floating point operation circuit 300. The floating point operation circuit 300 may perform a fused multiplication and addition (FMA) operation. The digital signal processing core 140 may support a fast division operation by using the floating point operation circuit 300 implemented to perform the fused multiplication and addition (FMA) operation. That is, the digital signal processing core 140 may support a fast division operation without a floating point operation circuit implemented to perform a division operation, that is, a hardware accelerator.

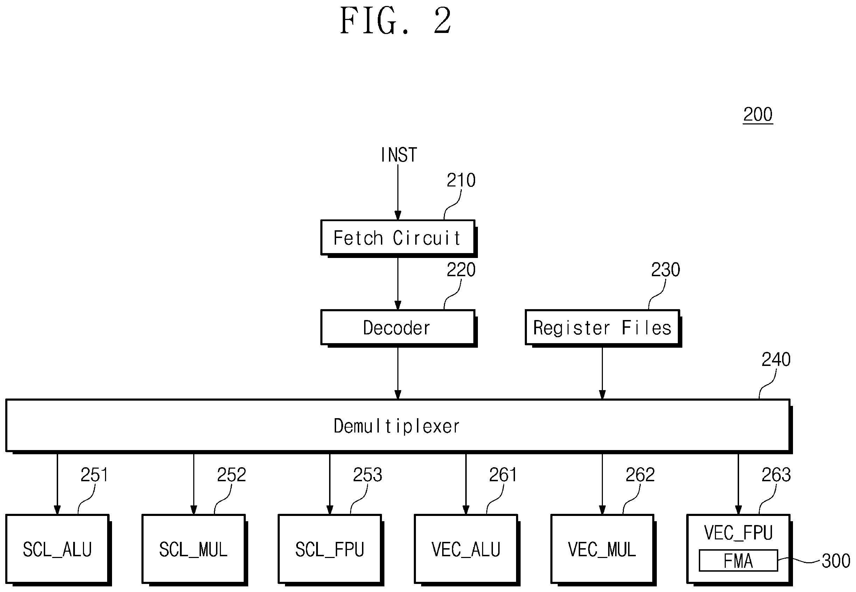

FIG. 2 illustrates a digital signal processing core 200 according to an embodiment of the present disclosure.

In an embodiment, the digital signal processing core 200 may be included in the digital signal processing core 140 illustrated in FIG. 1. Referring to FIGS. 1 and 2, the digital signal processing core 200 may include, for example, a fetch circuit 210, a decoder 220, register files 230, a demultiplexer 240, a first scalar operation circuit 251, a second scalar operation circuit 252, a third scalar operation circuit 253, a first vector operation circuit 261, a second vector operation circuit 262, and a third vector operation circuit 263.

The fetch circuit 210 may fetch an instruction INST from a source external to the digital signal processing core 200. For example, the fetch circuit 210 may receive the instruction INST from the central processing core 110 or may receive the instruction INST from a decoder that is placed in the digital signal processing core 140, may receive an external instruction from the central processing core 110, and may generate the instruction INST as an internal instruction. In an embodiment, the instruction INST may originate from any component other than the central processing core 110 such as, for example, the graphic processing core 120 or the neural processing core 130. The fetch circuit 210 may transfer the fetched instruction INST to the decoder 220.

The decoder 220 may decode the instruction INST transferred from the fetch circuit 210. Depending on a descriptor included in the instruction INST or the type of an operation included in the instruction INST, the decoder 220 may select one operation circuit of the first scalar operation circuit 251, the second scalar operation circuit 252, the third scalar operation circuit 253, the first vector operation circuit 261, the second vector operation circuit 262, and the third vector operation circuit 263, and may control the demultiplexer 240 such that the operation included in the instruction INST is requested to the selected operation circuit.

When the instruction INST includes values for the operation, the decoder 220 may store the values of the operation in corresponding registers (e.g., indicated by an address included in the instruction INST) of the register files 230. The instruction INST may control the demultiplexer 240 such that registers, which are used to store input values utilized for the operation and to store an output value of the operation, from among a plurality of registers of the register files 230, are connected with the selected operation circuit.

The register files 230 may include a plurality of registers. The register files 230 may store input values and an output value(s) of the selected operation circuit. For example, the input values may be transferred from the decoder 220, may be transferred from the central processing core 110, or may be transferred from the decoder that generates the instruction INST as an internal instruction. The input values may be transferred to the selected operation circuit through the demultiplexer 240. The output value(s) may be transferred to the corresponding register(s) of the registers of the register files 230 through the demultiplexer 240.

Under control of the decoder 220, the demultiplexer 240 may arbitrate connections between the decoder 220, the register files 230, the first scalar operation circuit 251, the second scalar operation circuit 252, the third scalar operation circuit 253, the first vector operation circuit 261, the second vector operation circuit 262, and the third vector operation circuit 263.

The first scalar operation circuit 251 may be implemented with a scalar-based arithmetic logic unit SCL_ALU. The first scalar operation circuit 251 may support an arithmetic operation and a logical operation of floating point values. The second scalar operation circuit 252 may be implemented with a scalar-based multiplier SCL_MUL. The second scalar operation circuit 252 may support a multiplication operation of floating point values. The third scalar operation circuit 253 may be implemented with a scalar-based floating point unit SCL_FPU. The third scalar operation circuit 253 may support operations of floating point values.

The first vector operation circuit 261 may be implemented with a vector-based arithmetic logic unit VEC_ALU. The first vector operation circuit 261 may support an arithmetic operation and a logical operation of floating point values. The second vector operation circuit 262 may be implemented with a vector-based multiplier VEC_MUL. The second vector operation circuit 262 may support a multiplication operation of floating point values. The third vector operation circuit 263 may be implemented with a vector-based floating point unit VEC_FPU. The third vector operation circuit 263 may support operations of floating point values.

The third vector operation circuit 263, that is, the vector-based floating point unit VEC_FPU, may include the floating point operation circuit 300 according to an embodiment of the present disclosure. The floating point operation circuit 300 may support the fused multiplication and addition (FMA) operation and may support the division operation. In an embodiment, the floating point operation circuit 300 is disclosed as being included in the third vector operation circuit 263. However, embodiments of the present disclosure are not limited thereto. For example, in embodiments, the floating point operation circuit 300 may be included in the third scalar operation circuit 253, that is, the scalar-based floating point unit SCL_FPU.

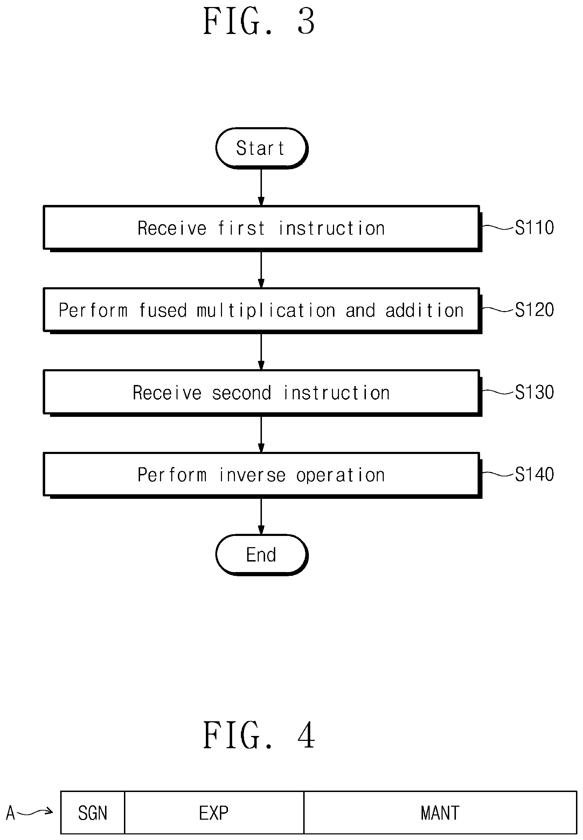

FIG. 3 illustrates an example of an operating method of the floating point operation circuit 300 according to an embodiment of the present disclosure.

Referring to FIGS. 2 and 3, in operation S110, the floating point operation circuit 300 may receive a first instruction. The first instruction may be an instruction requesting fused multiplication and addition (FMA).

In operation S120, the floating point operation circuit 300 may perform the fused multiplication and addition (FMA) operation. The floating point operation circuit 300 may receive input values A, B, and C from registers storing input values from among the registers of the register files 230. The floating point operation circuit 300 may perform an operation, which is defined by Equation 1 below, on the input values A, B, and C.
[Equation 1] $O = {\left(A\times B+C\right)}_{B}$

The floating point operation circuit 300 may store an output value "O" in a register designated to store an output value from among the registers of the register files 230. In an embodiment, the input values A, B, and C and the output value "O" may be binary values. However, the floating point operation circuit 300 is not limited to the case of performing an operation on binary values. Below, an embodiment of the present disclosure will be described with reference to examples of binary values. However, embodiments of the present disclosure are not limited thereto. For example, in embodiments, the floating point operation circuit 300 may perform an operation on various values such as an octal value, a decimal value, and a hexadecimal value.

In operation S130, the floating point operation circuit 300 may receive a second instruction. The second instruction may be an instruction different from the first instruction or may include a descriptor different from that of the first instruction. The second instruction may request an operation supporting division.

In operation S140, the floating point operation circuit 300 may perform an inverse operation (or inverse calculation). For example, the floating point operation circuit 300 may calculate an inverse value of one of input values. When the inverse value is obtained, the floating point operation circuit 300 may perform the same operation as the division through the fused multiplication and addition (FMA) operation.

In an embodiment, operation S 110 and operation S120 may constitute a first operation mode of the floating point operation circuit 300, in which the fused multiplication and addition (FMA) operation is performed. Operation S130 and operation S140 may constitute a second operation mode of the floating point operation circuit 300, in which the inverse operation is performed.

FIG. 4 illustrates an example of a format of a floating point value processed by the floating point operation circuit 300.

Referring to FIG. 4, a format of a floating point value may be based on the IEEE (Institute of Electrical and Electronics Engineers) 754 standard. The format may include, for example, a sign value SGN, an exponent value EXP, and a mantissa value MANT.

For example, in single precision, a floating point value may include a total of 32 bits, the sign value SGN may include one bit, the exponent value EXP may include 8 bits, and the mantissa value MANT may include 23 bits. In half precision or double precision, the number of bits of the exponent value EXP and the number of bits of the mantissa value MANT may be differently determined.

In an embodiment, a floating point value may be expressed by one of a value belonging to a normal range and a value belonging to a subnormal range. The subnormal range may include values that are incapable of being expressed by the normal range and have the number of digit lower than that of the normal range.

Based on the format of FIG. 4, when a value of "A" of Equation 1 belongs to the normal range, the value of "A" may be expressed by Equation 2 below.
[Equation 2] $A = {\left({\left(-1\right)}^{SGN _ A}{2}^{EXP _ A - BIAS}\times 1. MANT_A\right)}_{B}$

In Equation 2, "SGN_A" is a sign value, "EXP_A" is an exponent value, and "MANT_A" is a mantissa value. A value of "A" may be a binary floating point value. "BIAS" may be an exponent bias value. The exponent bias value BIAS may be a value that allows a total exponent value EXP_A-BIAS of the value of "A" to have both a negative value and a positive value. For example, when the exponent value EXP_A is smaller than the exponent bias value BIAS, the exponent value EXP_A of the value of "A" may represent a negative value. When the exponent value EXP_A is greater than the exponent bias value BIAS, the exponent value EXP_A of the value of "A" may represent a positive value. The mantissa value MANT_A may represent a value smaller than 1.

Values of "B" and "C" in Equation 1 may be represented as in the description in Equation 2. For example, the value of "B" may have a sign value SGN_B, an exponent value EXP_B, and a mantissa value MANT_B. The value of "C" may have a sign value SGN_C, an exponent value EXP_C, and a mantissa value MANT_C.

Based on the format of FIG. 4, when the value of "A" of Equation 1 belongs to the subnormal range, the value of "A" may be expressed by Equation 3 below.
[Equation 3] $A = {\left({\left(-1\right)}^{SGN _ A}{2}^{1 - BIAS}\times 0. MANT_A\right)}_{B}$

Hereinafter, for convenience of explanation and to prevent the description from being unnecessarily complicated, embodiments of the present disclosure will be described in a state where the sign value SGN of the floating point value is omitted.

In an embodiment, the digital signal processing core 140 (refer to FIG. 1) or the decoder 220 (refer to FIG. 2) may determine whether input values belong to the normal range or the subnormal range. The digital signal processing core 140 or the decoder 220 may provide the floating point operation circuit 300 with information indicating whether input values belong to the normal range or the subnormal range.

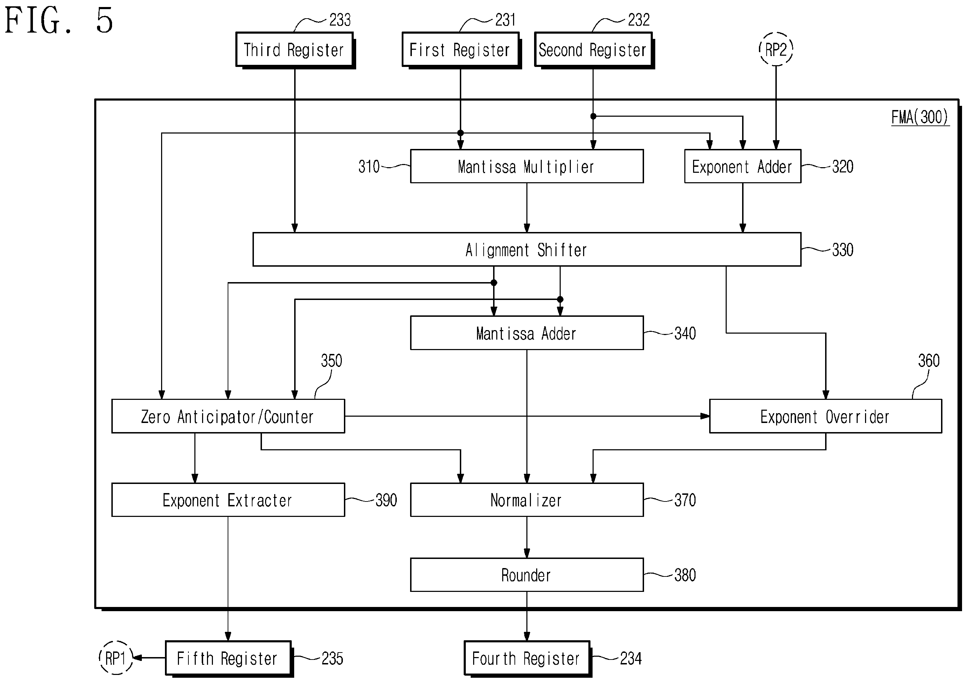

FIG. 5 illustrates the floating point operation circuit 300 performing fused multiplication and addition (FMA) and supporting division, according to an embodiment of the present disclosure.

Referring to FIGS. 3 and 5, the floating point operation circuit 300 may operate in association with a first register 231, a second register 232, a third register 233, a fourth register 234, and a fifth register 235 of the registers of the register files 230.

The first register 231, the second register 232, and the third register 233 may be used to store input values of the floating point operation circuit 300. The fourth register 234 may be used to store an output value of the floating point operation circuit 300. A value stored in the fourth register 234 may be transferred (e.g., fed back) to one of the first register 231, the second register 232, and the third register 233 so as to be used as an input value.

The fifth register 235 may be used to store output values of the floating point operation circuit 300, and may be used to provide (feed back) an input value to the floating point operation circuit 300 through a first relay point RP1 and a second relay point RP2. In an embodiment, an additional register may be provided in the second relay point RP2, and a value stored in the fifth register 235 may be transferred (e.g., fed back) to the additional register so as to be used as an input value of the floating point operation circuit 300.

The floating point operation circuit 300 may include a mantissa multiplier 310, an exponent adder 320, an alignment shifter 330, a mantissa adder 340, a zero anticipator and counter 350, an exponent overrider 360, a normalizer 370 , a rounder 380, and an exponent extractor 390.

The mantissa multiplier 310 may multiply a mantissa of the value stored in the first register 231 and a mantissa of the value stored in the second register 232. An output of the mantissa multiplier 310 is transferred to the alignment shifter 330.

The exponent adder 320 may operate in one of two schemes. In the first scheme, the exponent adder 320 may add an exponent of the value stored in the first register 231 and an exponent of the value stored in the second register 232. In the first scheme, the mantissa multiplier 310 and the exponent adder 320 may perform multiplication (e.g., multiplication of the fused multiplication and addition (FMA)) of the value stored in the first register 231 and the value stored in the second register 232.

In the second scheme, the exponent adder 320 may add the exponent of the value stored in the first register 231, the exponent of the value stored in the second register 232, and an exponent of the value stored in the fifth register 235. The output of the exponent adder 320 is transferred to the alignment shifter 330. In the second scheme, the mantissa multiplier 310 and the exponent adder 320 may perform multiplication of the value stored in the first register 231 and the value stored in the second register 232 and may add the exponent of the value stored in the fifth register 235 to an exponent of a result of the multiplication.

In an embodiment, because the mantissa of the value stored in the fifth register 235 is defined as 1, the mantissa multiplier 310 and the exponent adder 320 may perform multiplication of the value stored in the first register 231, the value stored in the second register 232, and the value stored in the fifth register 235. In the second scheme, the mantissa multiplier 310 and the exponent adder 320 may perform an inverse transform operation supporting multiplication and division of the fused multiplication and addition (FMA).

The alignment shifter 330 may align the number of digit of the value stored in the third register 233 and the number of digit of the value calculated (or computed) by the mantissa multiplier 310 and the exponent adder 320. For example, to efficiently perform addition of the fused multiplication and addition (FMA), the alignment shifter 330 may change an exponent value of one of the value of the third register 233 and the value calculated by the mantissa multiplier 310 and the exponent adder 320 such that a value of the exponent of the value of the third register 233 and a value of the exponent of the value calculated by the mantissa multiplier 310 and the exponent adder 320 coincides with each other. As much as the amount of change in a value of an exponent of one value, the alignment shifter 330 may change a value of a mantissa of the one value.

For example, when a value of an exponent of one value increases by as much as 1, the number of digit of a value of a mantissa of the one value may decrease (e.g., downward shift) by as much as 1. When the value of the exponent of the one value decreases by as much as 1, the number of digit of the value of the mantissa of the one value may increase (e.g., upward shift) by as much as 1.

For example, the alignment shifter 330 may fix a smaller value (or a greater value) of the value of the third register 233 and the value calculated by the mantissa multiplier 310 and the exponent adder 320, for example, a value having the lower (or higher) number of digit, and may shift an exponent value and a mantissa value of a value having the higher (or lower) number of digit.

After the alignment is completed, the alignment shifter 330 may output the mantissa value of the value of the third register 233 and the mantissa value of the value calculated by the mantissa multiplier 310 and the exponent adder 320 to the mantissa adder 340 and the zero anticipator and counter 350. After the alignment of the alignment shifter 330 is completed, the exponent value of the value of the third register 233 and the exponent value of the value calculated by the mantissa multiplier 310 and the exponent adder 320 may be equal. The alignment shifter 330 may output the exponent value to the exponent overrider 360.

The mantissa adder 340 may perform addition, for example, addition of the fused multiplication and addition (FMA), on the mantissa values output from the alignment shifter 330. The mantissa adder 340 may output a result of the addition to the normalizer 370.

The zero anticipator and counter 350 may operate in two schemes. In the first scheme, when mantissa values belong to the normal range, the zero anticipator and counter 350 may anticipate zeros generated after addition is performed by the mantissa adder 340. In an embodiment, when a sign value of the value stored in the first register 231 is different from a sign value of the value stored in the second register 232, the mantissa adder 340 may perform subtraction. In this case, when the first bits of the mantissa values input to the mantissa adder 340 are equal, the format of Equation 2 may not be satisfied. For example, when one mantissa value is 111001, the corresponding mantissa value may represent 1.111001. When another mantissa value is 110000, the corresponding mantissa value may represent 1.110000. A result of subtracting the another mantissa value from the one mantissa value may be 001001, which may represent 0.001001.

The zero anticipator and counter 350 may determine how many bits from the first bits of two mantissa values are equal. When k-th bits (k being a positive integer) of two mantissa values are different from each other, the first to k-1th bits of an output value of the mantissa adder 340 may have a bit value of "0". The zero anticipator and counter 350 may generate an anticipated zero count (e.g., a leading zero count). The zero anticipator and counter 350 may output the anticipated zero count to the normalizer 370.

When mantissa values belong to the subnormal range, the zero anticipator and counter 350 may omit an additional operation.

In the second scheme, when the value stored in the first register 231 belongs to the normal range, the zero anticipator and counter 350 may transfer an exponent value of the value stored in the first register 231 to the exponent extractor 390. Also, the zero anticipator and counter 350 may transfer a signal to the exponent overrider 360 such that the exponent overrider 360 is activated.

When the value stored in the first register 231 belongs to the subnormal range, the zero anticipator and counter 350 may generate a zero count (e.g., a leading zero count) of the value stored in the first register 231. The zero anticipator and counter 350 may output the zero count to the exponent extractor 390. Also, the zero anticipator and counter 350 may transfer a signal to the exponent overrider 360 such that the exponent overrider 360 is activated.

The exponent overrider 360 may operate in one of two schemes. In the first scheme, in response to the signal not being received from the zero anticipator and counter 350, the exponent overrider 360 may transfer the exponent value output from the alignment shifter 330 to the normalizer 370. In the second scheme, in response to the signal being received from the zero anticipator and counter 350, the exponent overrider 360 may substitute the exponent value output from the alignment shifter 330 with a specific value, for example, bits corresponding to -1. The exponent overrider 360 may transfer the substituted exponent value to the normalizer 370.

The normalizer 370 may receive the mantissa value from the mantissa adder 340 and may receive the exponent value from the exponent overrider 360. In response to the anticipated zero count not being received from the zero anticipator and counter 350, the normalizer 370 may normalize the exponent value and the mantissa value so as to coincide with the format of Equation 2 or Equation 3. For example, when the mantissa value by the addition of the mantissa adder 340 represents a value of 1 or more, the normalizer 370 may change (e.g., decrease) an exponent value of the mantissa value such that the mantissa value represents a value smaller than 1 and may change (e.g., increase) the exponent value depending on the changed (e.g., decreased) exponent value of the mantissa value.

In response to the anticipated zero count being received from the zero anticipator and counter 350, the normalizer 370 may normalize the exponent value and the mantissa value so as to coincide with the format of Equation 2. For example, the normalizer 370 may make the number of digit of the mantissa value output from the mantissa adder 340 higher by as much as a number obtained by adding 1 to the anticipated zero count. Also, the normalizer 370 may decrease the exponent value output from the exponent overrider 360 by as much as the number obtained by adding 1 to the anticipated zero count.

As mentioned above, when the mantissa value output from the mantissa adder 340 is "001001" and represents "0.001001", the normalizer 370 may normalize the mantissa value to "001000", which represents 1.001000. The normalizer 370 may output the normalized mantissa value and exponent value to the rounder 380.

The rounder 380 may perform rounding on the exponent value and the mantissa value received from the normalizer 370. For example, when the number of bits of the exponent value and the number of bits of the mantissa value are more than the number of bits defined in the format as shown in FIG. 4, the rounder 380 may decrease the number of bits of each of the exponent value and the mantissa value to the number of bits defined in the format illustrated in FIG. 4.

For example, the rounder 380 may normalize the exponent value and the mantissa value output from the normalizer 370 depending on one of various rounding policies, such as, for example, round off, ceil, floor, and round down, or depending on one dynamically selected policy from various rounding policies. The output of the rounder 380 may be stored in the fourth register 234.

The exponent extractor 390 may generate a transform factor TF from the exponent value or the zero count transferred from the zero anticipator and counter 350. The transform factor TF may be stored in the fifth register 235.

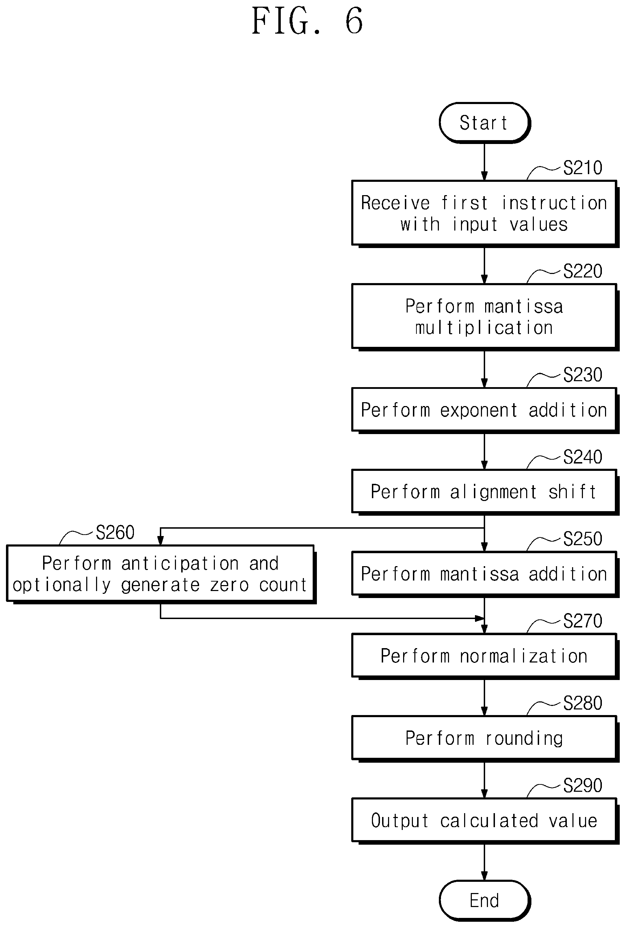

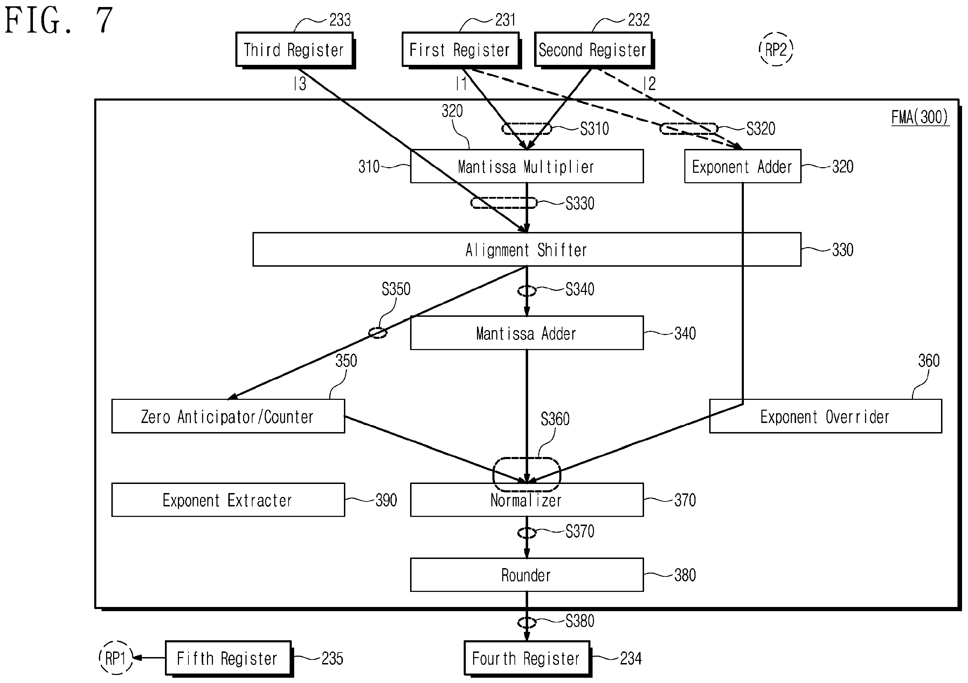

FIG. 6 illustrates an example in which the floating point operation circuit 300 of FIG. 5 performs the fused multiplication and addition (FMA) operation. FIG. 7 illustrates an example of a process in which calculation is performed by the floating point operation circuit 300 depending on the method of FIG. 6.

Referring to FIGS. 5 and 6, in operation S210, the floating point operation circuit 300 may receive a first instruction and input values. Values stored in the first register 231, the second register 232, and the third register 233 may be input to the floating point operation circuit 300 for the purpose of the fused multiplication and addition (FMA) operation. The values stored in the first register 231, the second register 232, and the third register 233 may have the format defined by Equation 2 or Equation 3.

In operation S220 and as indicated by operation S310 of FIG. 7, the mantissa multiplier 310 may perform mantissa multiplication. For example, the mantissa multiplier 310 may perform multiplication on a mantissa value of the value stored in the first register 231 and a mantissa value of the value stored in the second register 232.

In operation S230 and as indicated by operation S320 of FIG. 7, the exponent adder 320 may perform exponent addition in the first scheme. For example, the exponent adder 320 may perform addition on an exponent value of the value stored in the first register 231 and an exponent value of the value stored in the second register 232.

In operation S240 and as indicated by operation S330 of FIG. 7, the alignment shifter 330 may perform an alignment shift. For example, the alignment shifter 330 may align the number of digit of the value stored in the third register 233 and the number of digit of a value calculated by the mantissa multiplier 310 and the exponent adder 320 by shifting the number of digit of one of the value stored in the third register 233 and the value calculated by the mantissa multiplier 310 and the exponent adder 320.

In operation S250 and as indicated by operation S340 of FIG. 7, the mantissa adder 340 may perform mantissa addition. For example, the mantissa adder 340 may perform addition of mantissa values of values aligned by the alignment shifter 330.

In parallel with operation S250 and operation S340 of FIG. 7, in operation S260 and as indicated by operation S350 of FIG. 7, the zero anticipator and counter 350 may anticipate zeros coming from the addition of the mantissa adder 340 in the first scheme and may generate an anticipated zero count optionally (e.g., in the case where it is anticipated that the format of Equation 2 is not satisfied).

In operation S270 and as indicated by operation S360 of FIG. 7, the normalizer 370 may perform normalization. For example, the normalizer 370 may perform normalization based on the mantissa value calculated by the mantissa adder 340, the exponent value transferred from the alignment shifter 330 through the exponent overrider 360 operating in the first scheme, and the zero count anticipated optionally. Because the generation of the anticipated zero count (e.g., operation S260 and operation S350) is performed in parallel (or at the same time) with the mantissa addition (e.g., operation S250 and operation S340), the normalizer 370 may substantially simultaneously receive the output of the mantissa adder 340 and the output of the zero anticipator and counter 350. Accordingly, the normalizer 370 may perform normalization without a separate delay.

In operation S280 and as indicated by operation S370 of FIG. 7, the rounder 380 may perform rounding. For example, the rounder 380 may perform round off, ceil, floor, or round down on the value output from the normalizer 370.

In operation S290 and as indicated by operation S380 of FIG. 7, the floating point operation circuit 300 may output the calculated value. The output value may be stored in the fourth register 234.

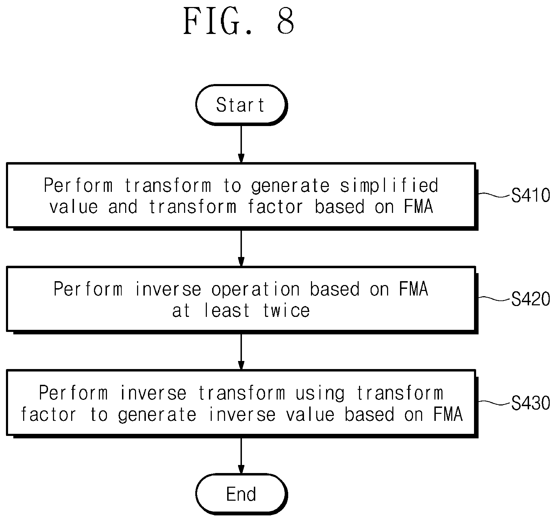

FIG. 8 illustrates an example in which the floating point operation circuit 300 of FIG. 5 performs an inverse operation.

Referring to FIGS. 5 and 8, in operation S410, the floating point operation circuit 300 may perform an FMA-based transform on input values stored in the first register 231, the second register 232, and the third register 233, and may generate a simplified value and the transform factor TF.

In operation S420, the floating point operation circuit 300 may perform an FMA-based inverse operation on the simplified value at least twice and may generate a simplified inverse value.

In operation S430, the floating point operation circuit 300 may perform an FMA-based inverse transform operation on the simplified inverse value by using the transform factor TF and may generate an inverse value of one of the input values stored in the first register 231, the second register 232, and the third register 233.

In an embodiment, the inverse operation in operation S420 may be based on a Newton-Raphson method (or algorithm). The process of calculating an inverse value based on the Newton-Raphson method may be defined by Equation 4.
[Equation 4] ${x}_{n} = {x}_{n - 1} \left(2-A\times {x}_{n - 1}\right)$

In Equation 4, "n" is a positive integer, and "x₀" is an arbitrary initial value and may be selected from a lookup table depending on a range of "A". For example, "x₀" may be determined in advance by the central processing core 110 (refer to FIG. 1) or the digital signal processing core 140. As the calculation of Equation 4 is performed as much as the given number of times, the inverse value of "A" may be calculated.

In Equation 4, when "A" is a positive number and a value of "A" is equal to about 0.5 or more and about 1 or less, the inverse value of "A" may be efficiently calculated. For example, when the value of "A" is in a range from about 0.5 or more to about 1 or less, the inverse value of "A" may be calculated by performing the calculation of Equation 4 at least twice.

The transform in operation S410 may generate a simplified value and a transform factor from an input value, and the simplified value may belong to the range from about 0.5 or more to about 1 or less. That is, an inverse value of the simplified value may be calculated by performing the inverse operation of operation S420 on the simplified value at least twice. The inverse transform operation in operation S430 may inversely transform the inverse value of the simplified value to the inverse value of "A" by applying the transform factor again.

In an embodiment, when an input value belongs to the subnormal range, an inverse value of a value of the subnormal range may exceed a range of a value of the normal range. That is, the inverse value of the input value of the subnormal range may be treated as infinite. This may cause the loss of information. To prevent the loss of information, when an input value belongs to the subnormal range, the inverse transform performed in operation S430 may be postponed. In a state where the floating point operation circuit 300 postpones the inverse transform operation in operation S430, the inverse value of the simplified value may be used for calculation (e.g., multiplication) of the digital signal processing core 140. When the inverse transform of the inverse value of the simplified value is utilized, for example, when an addition operation for the inverse value of the simplified value is utilized, the floating point operation circuit 300 may perform the inverse transform operation in operation S430, and thus, a loss of information may be suppressed.

In an embodiment, operation S410 may correspond to a first phase of the second operation mode of the floating point operation circuit 300. Operation S420 may correspond to a second phase of the second operation mode of the floating point operation circuit 300. Operation S430 may correspond to a third phase of the second operation mode of the floating point operation circuit 300.

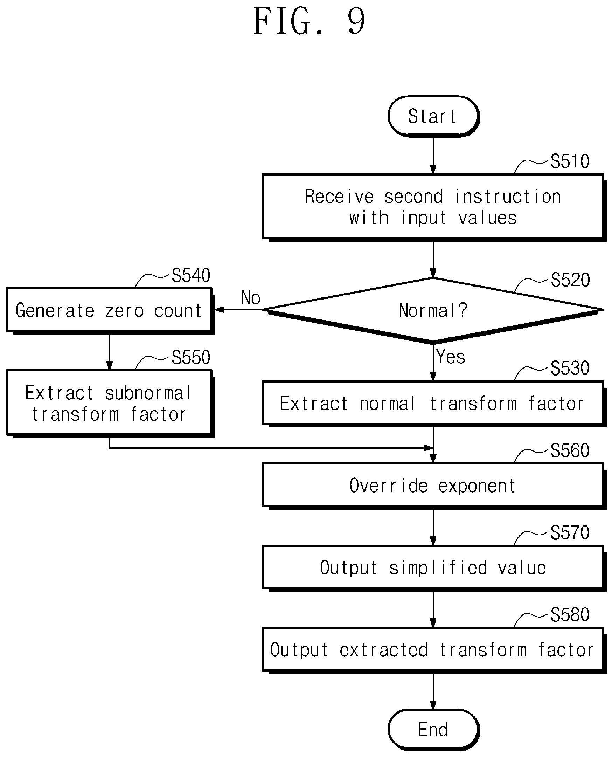

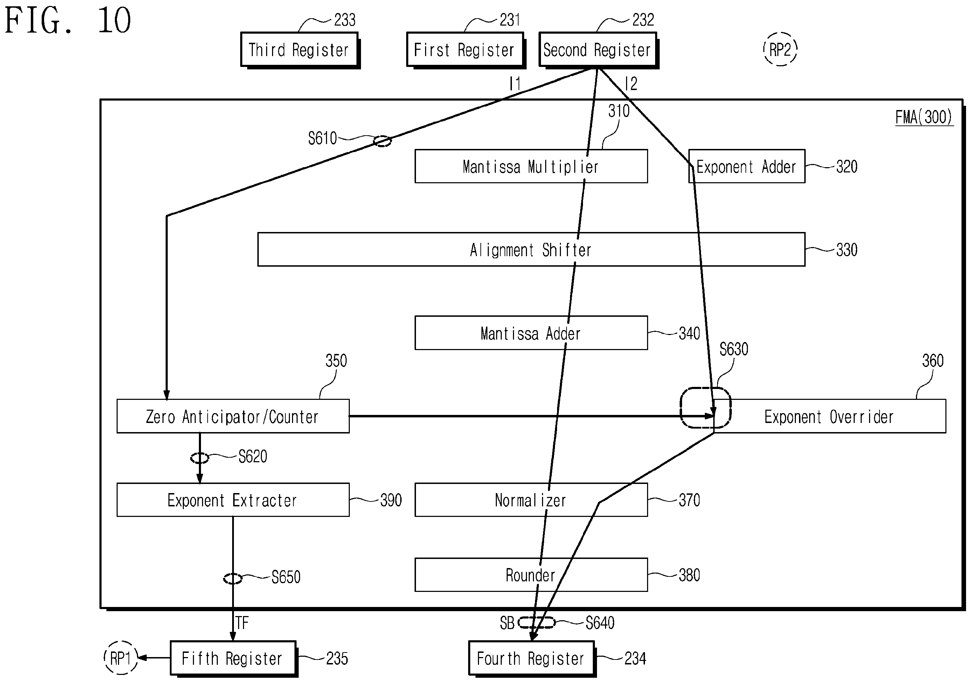

FIG. 9 illustrates an example of a method in which the floating point operation circuit 300 of FIG. 5 performs a transform operation. FIG. 10 illustrates an example of a process in which a transform operation is performed by the floating point operation circuit 300 depending on the method of FIG. 9.

Referring to FIGS. 9 and 10, in operation S510, the floating point operation circuit 300 may receive a second instruction and input values. For example, the input values that the floating point operation circuit 300 receives may be determined by Equation 5, Equation 6, and Equation 7.
[Equation 5] $I 1 = {\left({2}^{0}\times 1.0\right)}_{B}$
[Equation 6] $I 2 = A = {\left({2}^{EXP _ A - BIAS}\times 1. MANT_A\right)}_{B}$
[Equation 7] $I 3 = {0}_{B}$

As defined in Equation 5, the input value of the first register 231, which is a number to be multiplied in fused multiplication and addition (FMA), may be 1. That is, the input value of the first register 231 may not affect the fused multiplication and addition (FMA) operation. Accordingly, operations (or calculations) associated with the input value of the first register 231 will not be described.

As defined in Equation 6, the input value of the second register 232, which is a number to be multiplied in fused multiplication and addition (FMA), may be "A". In transformation, the transform factor TF and a simplified value SB may be generated from the value of "A" stored in the second register 232.

As defined in Equation 7, the input value of the third register 233, which is a number to be added in fused multiplication and addition (FMA), may be "0". That is, the input value of the third register 233 may not affect the fused multiplication and addition (FMA) operation. Accordingly, operations (or calculations) associated with the input value of the third register 233 will not be described.

As indicated by operation S610 of FIG. 10, the zero anticipator and counter 350 may receive an exponent value of the value of "A" stored in the second register 232. The zero anticipator and counter 350 may differently operate depending on whether the value of "A" belongs to the normal range or belongs to the subnormal range.

When it is determined in operation S520 that the value of "A" belongs to the normal range, as indicated by operation S610 of FIG. 10, the zero anticipator and counter 350 may output the exponent value of the value of "A". In operation S530 and as indicated by operation S620 of FIG. 10, the exponent extractor 390 may generate a normal transform factor TF_{N} from the transferred exponent value. The normal transform factor TF_{N} may be defined by Equation 8.
[Equation 8] ${TF}_{N} = {\left({2}^{- \left(EXP_B-BIAS+1\right)}\right)}_{B} = {\left({2}^{BIAS - EXP _ B - 1}\right)}_{B}$

When it is determined in operation S520 that the value of "A" does not belong to the normal range, that is, belongs to the subnormal range, in operation S540 and as indicated by operation S610 of FIG. 10, the zero anticipator and counter 350 may generate a zero count of the value of "A". The zero anticipator and counter 350 may output a zero count ZC. In operation S550 and as indicated by operation S620 of FIG. 10, the exponent extractor 390 may generate a subnormal transform factor TF_{SN} from the transferred zero count ZC. The subnormal transform factor TF_{SN} may be defined by Equation 9.
[Equation 9] ${TF}_{SN} = {\left({2}^{ZC + BIAS - 2}\right)}_{B}$

In an embodiment, as a result of multiplying the exponent value of the value of "A" of Equation 2 and the normal transform factor TF_{N}, the exponent value of the value of "A" may be -1. Also, as a result of multiplying the exponent value of the value of "A" of Equation 3 and the subnormal transform factor TF_{SN}, the exponent value of the value of "A" may be -1. That is, when a transform operation of multiplying the transform factor TF (e.g., the normal transform factor TF_{N} or the subnormal transform factor TF_{SN}) with the value of "A" is performed, the value of "A" may be simplified to have an exponent value of -1.

Instead of actually multiplying the transform factor and the value of "A" together, in operation S560 and as indicated by operation S630 of FIG. 10, the exponent overrider 360 may substitute the exponent value of the value of "A" with -1 in response to the signal being received from the zero anticipator and counter 350. Accordingly, in operation S570 and as indicated by operation S640 of FIG. 10, the floating point operation circuit 300 may transform and output the value of "A" into the simplified value SB having the exponent value of -1 and the mantissa value of "A". The simplified value SB may be stored in the fourth register 234.

In operation S580 and as indicated by operation S650 of FIG. 10, the floating point operation circuit 300 may output the transform factor TF generated from the value of "A". The transform factor TF may be stored in the fifth register 235. The transform factor TF may be again used in an inverse transform operation.

Subsequently, the above-described inverse operation (refer to operation S420 of FIG. 8) may be performed. The inverse operation may be used based on the simplified value SB. The inverse operation may be performed based on the fused multiplication and addition (FMA) described with reference to FIGS. 6 and 7. The inverse operation may include a plurality of operation cycles, and each of the plurality of operation cycles may include two or more fused multiplication and addition (FMA) operations. Each of the plurality of operation cycles may correspond to perform the calculation of Equation 4 once.

Each calculation operation of each operation cycle may use the value stored in the fourth register 234 in an immediately previous calculation operation. In the first calculation operation of the first operation cycle, the fourth register 234 may store the simplified value SB. Input values of the first calculation operation may be determined by Equation 10, Equation 11, and Equation 12.
[Equation 10] $I 1 = - SB = - {\left({2}^{- 1}\times 1. MANT_B\right)}_{B}$
[Equation 11] $I 2 = {\left({x}_{0}\right)}_{B}$
[Equation 12] $I 3 = {\left({2}^{1}\times 1.0\right)}_{B}$

An output of the first calculation operation of the first operation cycle, that is, the value to be stored in the fourth register 234, may be determined by Equation 13.
[Equation 13] $O = \left(I3+I1\times I2\right) = {\left({2}^{1}-SB\times {x}_{0}\right)}_{B}$

The second calculation operation of the first operation cycle may use a value of Equation 13 stored in the fourth register 234. Input values of the second calculation operation of the first operation cycle may be determined by Equation 14, Equation 15, and Equation 16.
[Equation 14] $I 1 = {\left({2}^{1}-SB\times {x}_{0}\right)}_{B}$
[Equation 15] $I 2 = {\left({x}_{0}\right)}_{B}$ [Equation 16] $I 3 = {0}_{B}$

An output of the first calculation operation of the first operation cycle, that is, the value to be stored in the fourth register 234, may be determined by Equation 17.

[Equation 17] $O = {x}_{0} {\left({2}^{1}-SB\times {x}_{0}\right)}_{B} = {x}_{1}$

When the first operation cycle is performed, the calculation of Equation 4 may be completed once. Subsequently, the operation cycle of Equation 10 to Equation 17 may be performed as the second operation cycle by using x₁ instead of x₀.

When the operation cycle is performed at least twice, the value stored in the fourth register 234 may approximate to the inverse value of the simplified value SB.

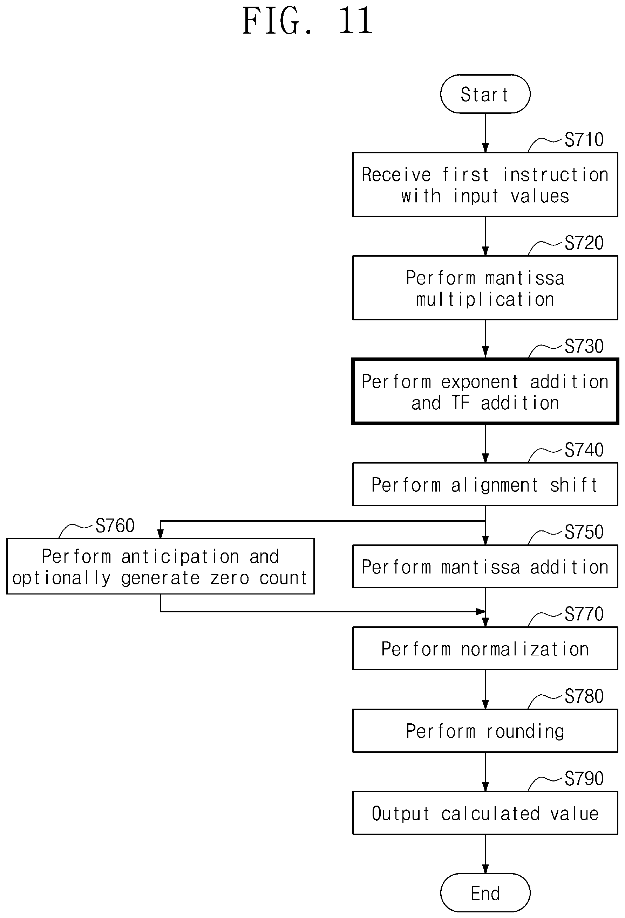

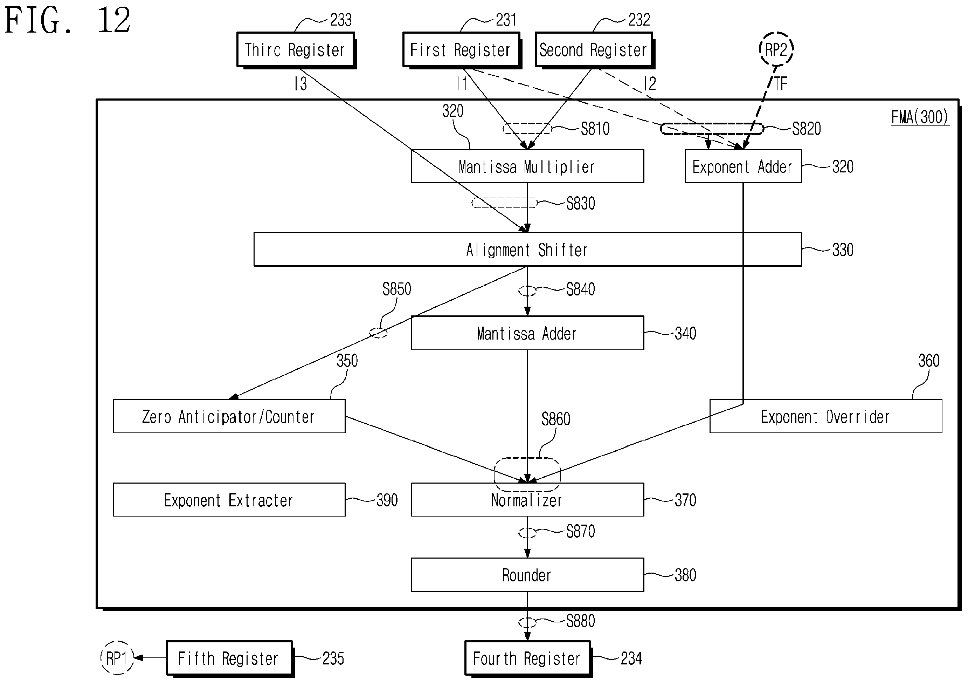

FIG. 11 illustrates an example of a method in which the floating point operation circuit 300 of FIG. 5 performs an inverse transform operation. FIG. 12 illustrates an example of a process in which an inverse transform operation is performed by the floating point operation circuit 300 depending on the method of FIG. 11. In an embodiment, an example in which, when the operation cycle of the inverse transform operation is performed at least twice, the inverse transform operation is performed in the last calculation operation of the calculation operations will be described with reference to FIGS. 11 and 12. However, embodiments of the present disclosure are not limited thereto. For example, in embodiments, the inverse transform operation may be performed based on fused multiplication and addition (FMA) independently regardless of the operation cycle of the inverse operation.

Operation S710, operation S720, and operation S740 to operation S790 of FIG. 11 are performed in the same manner as operation S210, operation S220, and operation S240 to operation S290 of FIG. 6. Also, operation S810, and operation S830 to operation S880 of FIG. 12 are performed in the same manner as operation S310, and operation S330 to operation S380 of FIG. 7. Thus, for convenience of explanation, a further description of these operations will be omitted.

In operation S730 and as indicated by operation S820 of FIG. 12, when the fused multiplication and addition (FMA) operation is performed, the exponent adder 320 may add an exponent value of the value of the first register 231 and an exponent value of the value of the second register 232. In addition, the exponent adder 320 may further add an exponent value of the transform factor TF stored in the fifth register 235. That is, the exponent value of the output value stored in the fourth register 234 may increase by as much as the exponent value of the transform factor TF.

In the transform process of operation S410 of FIG. 8, the relationship between the simplified value SB, the value of "A", and the transform factor TF may be defined by Equation 18.
[Equation 18] $SB = A \times TF$

An output before the inverse transform operation is performed, that is, a simplified output O_{S}, may be defined by Equation 19 from Equation 18.
[Equation 19] ${O}_{S} = \frac{1}{SB} = \frac{1}{A \times TF}$

In the case of multiplying the transform factor TF and the simplified output O_{S} together, that is, increasing an exponent value of the simplified output O_{S} by as much as the exponent value of the transform factor TF, an output may be defined by Equation 20.
[Equation 20] $O = {O}_{S} \times TF = \frac{TF}{SB} = \frac{TF}{A \times TF} = \frac{1}{A}$

Accordingly, the inverse value of the value of "A" may be obtained by multiplying the simplified output O_{S} and the transform factor TF together.

As described above, the floating point operation circuit 300 according to an embodiment of the present disclosure may simplify the inverse operation by applying a transform factor to a target. The number of times the inverse operation is performed may be decreased by performing the inverse operation on the simplified value SB. Also, the inverse transform operation may be included in the process of performing the inverse operation. Accordingly, an operation cycle utilized for the inverse transform operation may be omitted.

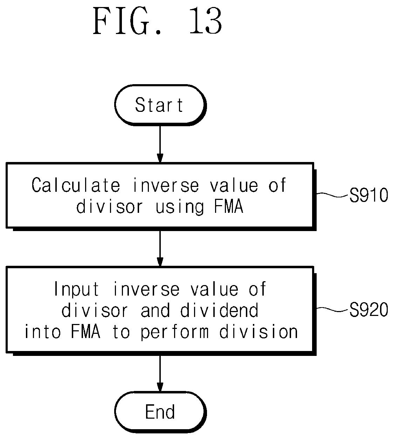

FIG. 13 illustrates an example of performing division by using the fused multiplication and addition (FMA) operation of the floating point operation circuit 300.

Referring to FIGS. 1, 5, and 13, in operation 910, the digital signal processing core 140 may calculate an inverse value of a divisor by using the fused multiplication and addition (FMA) operation of the floating point operation circuit 300.

In operation S920, the digital signal processing core 140 may input the inverse value of the divisor and a dividend to the fused multiplication and addition (FMA) operation of the floating point operation circuit 300 and may perform a division operation.

As described above, the digital signal processing core 140 according to an embodiment of the present disclosure may perform division by using the fused multiplication and addition (FMA) operation of the floating point operation circuit 300. The division operation may be performed at a fast speed based on the transform and inverse transform. That is, a speed at which the digital signal processing core 140 performs the division operation may be increased according to embodiments. Also, because an operation time of the digital signal processing core 140 decreases, the power consumption of the digital signal processing core 140 may be reduced according to embodiments.

The floating point division operation may be used in various applications. For example, the Newton-Raphson method may provide an iteration equation for calculating the square loop of a value of "A", and the iteration equation may include division as in Equation 21.
[Equation 21] ${x}_{n} = \frac{1}{2} \left({x}_{n - 1}+\frac{A}{{x}_{n - 1}}\right)$

A softmax function that is used as an activation function in a neural network module may include division as in Equation 22.
[Equation 22] ${y}_{i} = \frac{{e}^{{x}_{i}}}{{\sum }_{j = 0}^{k} {e}^{{x}_{j}}}$

A sigmoid function that is used as the activation function in the neural network module may include division as in Equation 23.
[Equation 23] ${y}_{i} = \frac{1}{1 + {e}^{- x}}$

Calculation of an output position when performing warping in a computer vision module may include division as in Equation 24.
[Equation 24] ${y}_{i} = \frac{a \times u + b \times v + c}{g \times u + h \times v + 1}$

In embodiments, the neural network module and the computer vision module may use floating point values for increased accuracy. The neural network module and the computer vision module may be implemented to use the digital signal processing core 140, which may increase speed, according to an embodiment of the present disclosure.

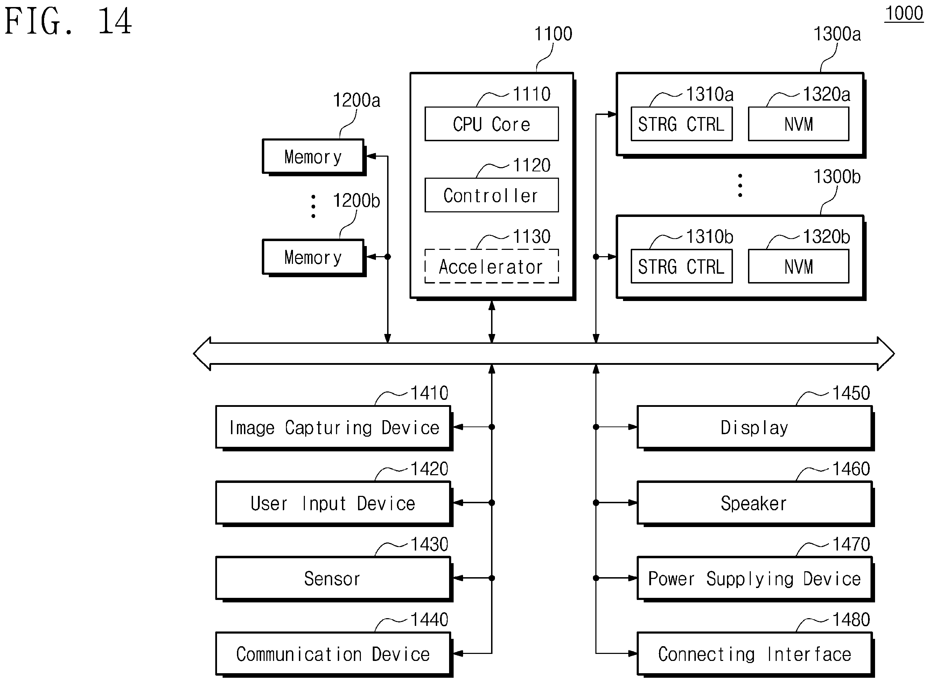

FIG. 14 is a diagram of a system 1000 to which a storage device is applied, according to an embodiment.

The system 1000 of FIG. 14 may be a mobile system, such as, for example, a portable communication terminal (e.g., a mobile phone), a smartphone, a tablet personal computer (PC), a wearable device, a healthcare device, or an Internet of Things (IOT) device. However, the system 1000 of FIG. 14 is not necessarily limited to a mobile system. For example, according to embodiments, the system 1000 of FIG. 14 may be a PC, a laptop computer, a server, a media player, or an automotive device (e.g., a navigation device).

Referring to FIG. 14, the system 1000 may include a main processor 1100, memories (e.g., 1200a and 1200b), and storage devices (e.g., 1300a and 1300b). In addition, the system 1000 may include at least one of an image capturing device 1410, a user input device 1420, a sensor 1430, a communication device 1440, a display 1450, a speaker 1460, a power supplying device 1470, and a connecting interface 1480.

The main processor 1100 may control all operations of the system 1000, for example, operations of other components included in the system 1000. The main processor 1100 may be implemented as, for example, a general-purpose processor, a dedicated processor, or an application processor.

The main processor 1100 may include at least one CPU core 1110 and a controller 1120 configured to control the memories 1200a and 1200b and/or the storage devices 1300a and 1300b. In some embodiments, the main processor 1100 may further include an accelerator 1130, which is a dedicated circuit for a high-speed data operation, such as an artificial intelligence (AI) data operation. The accelerator 1130 may include a graphics processing unit (GPU), a neural processing unit (NPU) and/or a data processing unit (DPU), and may be implemented as a chip that is physically separate from the other components of the main processor 1100.

The memories 1200a and 1200b may be used as main memory devices of the system 1000. Each of the memories 1200a and 1200b may include a volatile memory, such as, for example, static random access memory (SRAM) and/or dynamic RAM (DRAM), or may include non-volatile memory, such as, for example, a flash memory, phase-change RAM (PRAM) and/or resistive RAM (RRAM). The memories 1200a and 1200b may be implemented in the same package as the main processor 1100.

The storage devices 1300a and 1300b may serve as non-volatile storage devices configured to store data regardless of whether power is supplied thereto, and have larger storage capacity than the memories 1200a and 1200b. The storage devices 1300a and 1300b may respectively include storage controllers (STRG CTRL) 1310a and 1310b and Non-Volatile Memories (NVMs) 1320a and 1320b configured to store data via the control of the storage controllers 1310a and 1310b. Although the NVMs 1320a and 1320b may include flash memories having a two-dimensional (2D) structure or a three-dimensional (3D) V-NAND structure, the NVMs 1320a and 1320b may include other types of NVMs, such as, for example, PRAM and/or RRAM.

The storage devices 1300a and 1300b may be physically separated from the main processor 1100 and included in the system 1000 or implemented in the same package as the main processor 1100. The type of the storage devices 1300a and 1300b may be, for example, solid-state devices (SSDs) or memory cards, and the storage devices 1300a and 1300b may be removably combined with other components of the system 100 through an interface, such as the connecting interface 1480 that will be described further below. The storage devices 1300a and 1300b may be devices to which a standard protocol, such as a universal flash storage (UFS), an embedded multi-media card (eMMC), or a non-volatile memory express (NVMe), is applied, without being limited thereto.

The image capturing device 1410 may capture still images or moving images. The image capturing device 1410 may include, for example, a camera, a camcorder, and/or a webcam.

The user input device 1420 may receive various types of data input by a user of the system 1000 and include, for example, a touch pad, a keypad, a keyboard, a mouse, and/or a microphone.

The sensor 1430 may detect various types of physical quantities, which may be obtained from outside of the system 1000, and convert the detected physical quantities into electric signals. The sensor 1430 may include, for example, a temperature sensor, a pressure sensor, an illuminance sensor, a position sensor, an acceleration sensor, a biosensor, and/or a gyroscope sensor.

The communication device 1440 may transmit and receive signals between other devices outside the system 1000 according to various communication protocols. The communication device 1440 may include, for example, an antenna, a transceiver, and/or a modem.

The display 1450 and the speaker 1460 may serve as output devices configured to respectively output visual information and auditory information to the user of the system 1000.

The power supplying device 1470 may appropriately convert power supplied from a battery embedded in the system 1000 and/or an external power source, and supply the converted power to each of components of the system 1000.

The connecting interface 1480 may provide connection between the system 1000 and an external device, which is connected to the system 1000, and may be capable of transmitting and receiving data to and from the system 1000. The connecting interface 1480 may be implemented by using various interface schemes, such as, for example, advanced technology attachment (ATA), serial ATA (SATA), external SATA (e-SATA), small computer small interface (SCSI), serial attached SCSI (SAS), peripheral component interconnection (PCI), PCI express (PCIe), NVMe, IEEE 1394, a universal serial bus (USB) interface, a secure digital (SD) card interface, a multi-media card (MMC) interface, an eMMC interface, a UFS interface, an embedded UFS (eUFS) interface, and a compact flash (CF) card interface.

In an embodiment, the digital signal processing core 140 or 200 or the floating point operation circuit 300 described with reference to FIGS. 1 to 13 may be included in the accelerator 1130.

In the above-described embodiments, components according to the present disclosure are described by using the terms "first", "second", "third", etc. It will be understood that these terms "first", "second", "third", etc. are used herein to distinguish one element from another, and the elements are not limited by these terms. Thus, a "first" element in an embodiment may be described as a "second" element in another embodiment.

In the above-described embodiments, components according to embodiments of the present disclosure are referenced by using blocks. The blocks may be implemented with various hardware devices, such as, for example, an integrated circuit, an application specific IC (ASIC), a field programmable gate array (FPGA), and a complex programmable logic device (CPLD), firmware driven in hardware devices, software such as, for example, an application, or a combination of a hardware device and software. Also, the blocks may include circuits implemented with semiconductor elements in an integrated circuit, or circuits enrolled as an intellectual property (IP) block.

In the above-described embodiments, when two or more elements or values are described as being substantially the same as or about equal to each other, it is to be understood that the elements or values are identical to each other, the elements or values are equal to each other within a measurement error, or if measurably unequal, are close enough in value to be functionally equal to each other as would be understood by a person having ordinary skill in the art. For example, the term "about" as used herein is inclusive of the stated value and means within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations as understood by one of the ordinary skill in the art. Further, it is to be understood that while parameters may be described herein as having "about" a certain value, according to example embodiments, the parameter may be exactly the certain value or approximately the certain value within a measurement error as would be understood by a person having ordinary skill in the art. Other uses of these terms and similar terms to describe the relationships between components should be interpreted in a like fashion.

According to embodiments of the present disclosure, a floating point operation circuit generates a transform factor and a simplified value from a divisor, generates an inverse value of the simplified value from the simplified value, and calculates an inverse value of the divisor from the inverse value of the simplified value. The simplified value may have a value that increases a speed at which an inverse value is calculated. Accordingly, an operating method of a floating point operation circuit supporting a division operation at an increased speed, and an integrated circuit including the floating point operation circuit, are provided.

While the present disclosure has been described with reference to embodiments thereof, it will be apparent to those of ordinary skill in the art that various changes and modifications may be made thereto.

## Claims

1. An operating method of a floating point operation circuit, comprising:
in response to receiving a first instruction, generating a first output by performing a fused multiplication and addition operation on a first input from a first register of the floating point operation circuit, a second input from a second register of the floating point operation circuit, and a third input from a third register of the floating point operation circuit; and
in response to receiving a second instruction, generating a second output by inverting one input of a fourth input from the first register, a fifth input from the second register, and a sixth input from the third register,
wherein generating the second output comprises a first operation and a second operation,
wherein the first operation comprises:
generating a transform factor and a simplified value from the one input, wherein the simplified value is generated by multiplying the transform factor and the one input, wherein generating the transform factor and the simplified value from the one input is differently performed depending on whether the one input belongs to a normal range or belongs to a subnormal range; and wherein, when the generating the transform factor and the simplified value from the one input, in response to the one input belonging to the subnormal range, the transform factor has, as an exponent value, a value obtained by adding an exponent bias value to a zero count of a mantissa value of the one input and subtracting 2 therefrom; and
wherein the first operation further comprises storing the simplified value in a fourth register, transferring the simplified value from the fourth register to one of the first register, second register or third register to be used in the second operation, and storing the transform factor in a fifth register to be used in the second operation;
wherein the second operation comprises generating a simplified output by performing an inverse operation, which is based on the simplified value, the inverse operation comprising at least two operation cycles of the floating point operation circuit, and
wherein the second operation further comprises performing an inverse transform operation on the simplified output by using the transform factor, wherein the inverse transform operation is performed as part of the last operation cycle of the at least two operation cycles, and
wherein the inverse transform operation comprises multiplying the simplified output and the transform factor together to generate the second output

2. The method of claim 1, wherein the inverse operation is based on a Newton-Raphson method.

3. The method of claim 1 or claim 2, wherein the simplified value belongs to a range from about 0.5 to about 1.0.

4. The method of any one of claims 1 - 3, wherein generating the simplified output by performing the inverse operation based on the simplified value at least twice comprises:
performing the inverse operation once by performing the fused multiplication and addition operation, which is based on the first instruction, twice.

5. The method of claim 1, wherein, when generating the transform factor and the simplified value from the one input,
in response to the one input belonging to the normal range, the transform factor has, as an exponent value, a value obtained by subtracting an exponent value of the one input and 1 from an exponent bias value.

6. The method of any preceding claim, wherein an exponent value of the simplified value is fixed to -1.

7. The method of any preceding claim, wherein the simplified value is fixed as belonging to a normal range, regardless of whether the one input belongs to the normal range or belongs to a subnormal range.

8. The operating method of any preceding claim, wherein
the one input is a divisor of a division operation,
the second input is a dividend of the division operation, and
performing the fused multiplication and addition operation comprises performing a multiplication operation of the dividend and an inverse value of the divisor.

9. The method of claim 8, wherein the multiplication operation is performed based on a first operation mode, wherein the first operation mode supports the fused multiplication and addition operation.

## Patentansprüche

1. Betriebsverfahren für eine Gleitkomma-Operationsschaltung, umfassend:
als Reaktion auf Empfangen einer ersten Anweisung, Erzeugen einer ersten Ausgabe, indem eine kombinierte Multiplikations- und Additionsoperation an einer ersten Eingabe aus einem ersten Register der Gleitkomma-Operationsschaltung, einer zweiten Eingabe aus einem zweiten Register der Gleitkomma-Operationsschaltung und einer dritten Eingabe aus einem dritten Register der Gleitkomma-Operationsschaltung durchgeführt wird; und
als Reaktion auf Empfangen einer zweiten Anweisung, Erzeugen einer zweiten Ausgabe, indem eine Eingabe einer vierten Eingabe aus dem ersten Register, einer fünften Eingabe aus dem zweiten Register und einer sechsten Eingabe aus dem dritten Register umgekehrt werden,
wobei Erzeugen der zweiten Ausgabe eine erste Operation und eine zweite Operation umfasst,
wobei die erste Operation umfasst:
Erzeugen eines Transformationsfaktors und eines vereinfachten Werts aus der einen Eingabe, wobei der vereinfachte Wert durch Multiplizieren des Transformationsfaktors mit der einen Eingabe erzeugt wird, wobei Erzeugen des Transformationsfaktors und des vereinfachten Werts aus der einen Eingabe unterschiedlich durchgeführt wird, abhängig davon, ob die eine Eingabe zu einem normalen Bereich gehört oder zu einem subnormalen Bereich gehört; und wobei beim Erzeugen des Transformationsfaktors und des vereinfachten Werts aus der einen Eingabe, als Reaktion darauf, dass die eine Eingabe zu dem subnormalen Bereich gehört, der Transformationsfaktor als einen Exponentenwert einen Wert aufweist, der durch Addieren eines Exponentenverzerrungswerts zu einem Nullzählwert eines Mantissenwerts der einen Eingabe und Subtrahieren von 2 davon erhalten wird; und
wobei die erste Operation ferner Speichern des vereinfachten Wertes in einem vierten Register, Übertragen des vereinfachten Werts aus dem vierten Register in eines des ersten Registers, zweiten Registers oder dritten Registers, um in der zweiten Operation verwendet zu werden, und Speichern des Transformationsfaktors in einem fünften Register, um in der zweiten Operation verwendet zu werden, umfasst;
wobei die zweite Operation Erzeugen einer vereinfachten Ausgabe durch Durchführen einer inversen Operation umfasst, die auf dem vereinfachten Wert basiert, wobei die inverse Operation mindestens zwei Operationszyklen der Gleitkomma-Operationsschaltung umfasst, und
wobei die zweite Operation ferner Durchführen einer inversen Transformationsoperation an der vereinfachten Ausgabe unter Verwendung des Transformationsfaktors umfasst, wobei die inverse Transformationsoperation als Teil des letzten Operationszyklus der mindestens zwei Operationszyklen durchgeführt wird, und
wobei die inverse Transformationsoperation Multiplizieren der vereinfachten Ausgabe mit dem Transformationsfaktor umfasst, um die zweite Ausgabe zu erzeugen.

2. Verfahren nach Anspruch 1, wobei die inverse Operation auf einem Newton-Raphson-Verfahren basiert.

3. Verfahren nach Anspruch 1 oder Anspruch 2, wobei der vereinfachte Wert in einem Bereich von etwa 0,5 bis etwa 1,0 liegt.

4. Verfahren nach einem der Ansprüche 1-3, wobei Erzeugen der vereinfachten Ausgabe durch mindestens zweimaliges Durchführen der inversen Operation basierend auf dem vereinfachten Wert umfasst:
einmaliges Durchführen der inversen Operation durch zweimaliges Durchführen der kombinierten Multiplikations- und Additionsoperation, die auf der ersten Anweisung basiert.

5. Verfahren nach Anspruch 1, wobei beim Erzeugen des Transformationsfaktors und des vereinfachten Werts aus der einen Eingabe,
als Reaktion darauf, dass die eine Eingabe zu dem normalen Bereich gehört, der Transformationsfaktor einen Wert als einen Exponentenwert aufweist, der durch Subtrahieren eines Exponentenwerts der einen Eingabe und 1 von einem Exponentenverzerrungswert erhalten wird.

6. Verfahren nach einem vorstehenden Anspruch, wobei ein Exponentenwert des vereinfachten Werts auf -1 festgelegt ist.

7. Verfahren nach einem vorstehenden Anspruch, wobei der vereinfachte Wert unabhängig davon, ob die eine Eingabe zum normalen Bereich gehört oder zum subnormalen Bereich gehört, festgelegt ist, zu einem normalen Bereich zu gehören.

8. Verfahren nach einem vorstehenden Anspruch, wobei
die eine Eingabe ein Divisor einer Divisionsoperation ist,
die zweite Eingabe ein Dividend der Divisionsoperation ist, und
Durchführen der kombinierten Multiplikations- und Additionsoperation eine Multiplikationsoperation des Dividenden mit einem inversen Wert des Divisors umfasst.

9. Verfahren nach Anspruch 8, wobei die Multiplikationsoperation basierend auf einem ersten Operationsmodus durchgeführt wird, wobei der erste Operationsmodus die kombinierte Multiplikations- und Additionsoperation unterstützt.

## Revendications

1. Procédé de fonctionnement d'un circuit d'opération en virgule flottante, comprenant :
en réponse à la réception d'une première instruction, la génération d'une première sortie en réalisant une opération de multiplication et d'addition fusionnée sur une première entrée provenant d'un premier registre du circuit d'opération en virgule flottante, une deuxième entrée provenant d'un deuxième registre du circuit d'opération en virgule flottante et une troisième entrée provenant d'un troisième registre du circuit d'opération en virgule flottante ; et
en réponse à la réception d'une seconde instruction, la génération d'une seconde sortie en inversant une entrée d'une quatrième entrée provenant du premier registre, une cinquième entrée provenant du deuxième registre et une sixième entrée provenant du troisième registre,
dans lequel la génération de la seconde sortie comprend une première opération et une seconde opération,
dans lequel la première opération comprend :
la génération d'un facteur de transformation et d'une valeur simplifiée à partir de l'entrée inversée, dans lequel la valeur simplifiée est générée en multipliant le facteur de transformation et l'entrée inversée, dans lequel la génération du facteur de transformation et de la valeur simplifiée à partir de l'entrée inversée est réalisée différemment selon que l'entrée inversée appartient à une plage normale ou appartient à une plage sous-normale ; et dans lequel, lors de la génération du facteur de transformation et de la valeur simplifiée à partir de l'entrée inversée, en réponse à l'entrée inversée appartenant à la plage sous-normale, le facteur de transformation présente, en tant que valeur d'exposant, une valeur obtenue en ajoutant une valeur de biais d'exposant à un nombre de zéros d'une valeur de mantisse de l'entrée inversée et en soustrayant 2 ; et
dans lequel la première opération comprend en outre le stockage de la valeur simplifiée dans un quatrième registre, le transfert de la valeur simplifiée provenant du quatrième registre vers l'un parmi le premier registre, le deuxième registre ou le troisième registre à utiliser dans la seconde opération, et le stockage du facteur de transformation dans un cinquième registre à utiliser dans la seconde opération ;
dans lequel la seconde opération comprend la génération d'une sortie simplifiée en réalisant une opération inverse, qui est basée sur la valeur simplifiée, l'opération inverse comprenant au moins deux cycles d'opération du circuit d'opération en virgule flottante, et
dans lequel la seconde opération comprend en outre la réalisation d'une opération de transformation inverse sur la sortie simplifiée à l'aide du facteur de transformation, dans lequel l'opération de transformation inverse est réalisée dans le cadre du dernier cycle d'opération des au moins deux cycles d'opération, et
dans lequel l'opération de transformation inverse comprend la multiplication de la sortie simplifiée et du facteur de transformation pour générer la seconde sortie.

2. Procédé selon la revendication 1, dans lequel l'opération inverse est basée sur une méthode de Newton-Raphson.

3. Procédé selon la revendication 1 ou la revendication 2, dans lequel la valeur simplifiée appartient à une plage allant d'environ 0,5 à environ 1,0.

4. Procédé selon l'une quelconque des revendications 1-3, dans lequel la génération de la sortie simplifiée en réalisant au moins deux fois l'opération inverse basée sur la valeur simplifiée comprend :
la réalisation de l'opération inverse une fois en réalisant deux fois l'opération de multiplication et d'addition fusionnée, qui est basée sur la première instruction.

5. Procédé selon la revendication 1, dans lequel, lors de la génération du facteur de transformation et de la valeur simplifiée à partir de l'entrée inversée,
en réponse à l'entrée inversée appartenant à la plage normale, le facteur de transformation présente, en tant que valeur d'exposant, une valeur obtenue en soustrayant une valeur d'exposant de l'entrée inversée et 1 d'une valeur de biais d'exposant.

6. Procédé selon une quelconque revendication précédente, dans lequel une valeur d'exposant de la valeur simplifiée est fixée à -1.

7. Procédé selon une quelconque revendication précédente, dans lequel la valeur simplifiée est fixée comme appartenant à une plage normale, que l'entrée inversée appartienne à la plage normale ou à une plage sous-normale.

8. Procédé de fonctionnement selon une quelconque revendication précédente, dans lequel l'entrée inversée est un diviseur d'une opération de division,
la deuxième entrée est un dividende de l'opération de division, et
la réalisation de l'opération de multiplication et d'addition fusionnée comprend la réalisation d'une opération de multiplication du dividende et d'une valeur inverse du diviseur.

9. Procédé selon la revendication 8, dans lequel l'opération de multiplication est réalisée sur la base d'un premier mode d'opération, dans lequel le premier mode d'opération prend en charge l'opération de multiplication et d'addition fusionnée.
